# FASCICULE DE BREVET EUROPEEN

(11) **EP 0 619 482 B1**
(45) Date de publication et mention de la délivrance du brevet: **03.06.1998**
(21) Numéro de dépôt: 94400647.7
(22) Date de dépôt: 25.03.1994
(51) Int. Cl.: G01N 21/55, G01M 13/00

(54) **Procédé et dispositif de contrôle de la continuité d'un cordon de colle**
Vorrichtung zur Kontrolle der Kontinuität eines verbindungsabdichteten Klebestrangs
Apparatus for controlling the continuity of a joint-forming adhesive ribbon

(30) Priorité: 05.04.1993 FR 9303985
(43) Date de publication de la demande: 12.10.1994
(73) Titulaire: RENAULT AUTOMATION, 92100 Boulogne (FR)
(72) Inventeur: Pajot, Daniel, F-91070 Bondoufle (FR)
(74) Mandataire: Robert, Jean-Pierre

(56) Documents cités:
- EP-A- 0 454 561
- NL-A- 8 701 093
- US-A- 4 037 724
- US-A- 4 873 432

## Description

La présente invention concerne un procédé et un dispositif de contrôle de la continuité d'un cordon de produit, tel qu'un cordon de colle formant un joint entre deux surfaces planes, par exemple entre deux pièces d'un carter de moteur à combustion interne.

Depuis plusieurs années, l'étanchéité entre deux pièces d'un carter bridé l'une sur l'autre est réalisée par le dépôt et l'écrasement d'un cordon de produit pâteux déposé sur la surface de bridage, généralement plane, de l'une des pièces sur l'autre.

L'étanchéité n'est garantie que si le cordon est continu et possède avant écrasement une certaine largeur.

Une technique connue pour assurer la surveillance de la continuité d'un tel cordon consiste (voir par exemple EP-A-0 454 561), au moyen d'un faisceau de fibres optiques, à éclairer une scène où doit normalement se trouver le cordon et à recueillir par un autre faisceau de fibres optiques la lumière réfléchie pour l'analyser et en déduire la présence ou l'absence du cordon. En effet le cordon par sa couleur influence les longueurs d'onde de la lumière réfléchie et en pratiquant une comparaison de cette lumière ou d'une fraction (en termes de longueur d'onde) de celle-ci à un seuil, on engendre ou non un signal d'alerte significatif d'une absence de cordon.

Cette technique présente de nombreux inconvénients qui tiennent essentiellement à la nature optique des signaux et aux moyens de leur transmission tant en ce qui concerne les rayons incidents que les rayons réfléchis.

En effet ce dispositif, pour être de faible encombrement et pour suivre de manière précise le cordon à contrôler, met en oeuvre un "joint optique tournant" grâce auquel la lumière incidente et la lumière réfléchie sont transmises entre une pièce fixe et une pièce mobile en rotation, sans que des conducteurs limitent le degré de débattement angulaire d'une pièce par rapport à l'autre. Cependant ce joint optique tournant introduit dans la chaîne lumineuse des perturbations qui sont d'un ordre suffisant pour rendre l'analyse et le contrôle des informations contenus dans la lumière réfléchie peu sûrs. On s'est en outre rendu compte que la qualité réflective du fond, c'est à dire la surface métallique sur laquelle est déposé le cordon de colle, est très disparate. Il est alors très difficile d'obtenir un signal automatique de présence ou d'absence du cordon de colle qui soit fiable.

L'invention se propose d'améliorer ce dispositif et la méthode d'analyse, d'une part en supprimant les causes d'erreur et de dispersion dans un signal de retour et d'autre part en permettant une visualisation permanente et en continu du cordon grâce à laquelle un contrôle visuel peut être ajouter au contrôle automatique par capteur.

A cet effet l'invention a donc pour premier objet un procédé pour contrôler le cordon d'un produit formant joint délivré sur une surface par l'extrémité d'une buse déplacée au-dessus de cette surface le long d'un trajet déterminé selon lequel on éclaire derrière la buse par rapport à son sens de déplacement, la fraction du cordon fraîchement déposée par un faisceau lumineux issu d'un faisceau de fibres optiques et on recueille la lumière réfléchie pour la transmettre à une unité de traitement. Selon l'invention, le faisceau de fibres optiques est tubulaire, la lumière réfléchie est transmise à l'unité de traitement le long d'un chemin optique qui conserve la structure et l'orientation de la scène éclairée jusqu'à un capteur de transformation de cette lumière en signaux électriques, ce capteur étant mobile avec le faisceau tubulaire de fibres optiques d'éclairement et on transmet les signaux électriques issus de ce capteur, mais éventuellement traités, à une installation fixe d'exploitation au travers de contacts frottants.

On comprend que par cette disposition on supprime tous les parasites qui peuvent exister au niveau d'un joint tournant optique pour ce qui concerne la lumière réfléchie qui est d'intensité lumineuse relativement faible. En effet on sait faire aujourd'hui des contacts frottants dans lequel aucune déperdition ne se produit d'autant que, dans l'appareil selon l'invention, la rotation des pièces fixe et mobile l'une par rapport à l'autre est de faible vitesse et de faible amplitude. En outre, le procédé selon l'invention conserve la structure et l'orientation de la scène observée qui peut donc facilement être reconstituée, contrairement à des systèmes à fibres optiques où, à moins d'utiliser des techniques d'imagerie médicale qui sont fort coûteuses, seules l'intensité et la couleur d'un signal émit par une scène observée peuvent être transmises.

Pour mettre en oeuvre ce procédé de manière économique, et donc pouvoir s'affranchir de techniques de fibres optiques ordonnées donc coûteuses, l'invention a pour deuxième objet un dispositif qui comporte une buse de formation du cordon de colle, des organes de détection situés à proximité de la sortie de la buse et portés par un rotor tournant par rapport à un stator supportant la buse, autour d'un axe confondu avec celui de la buse, des moyens de transmission aux organes de détection d'une lumière d'éclairement comprenant un faisceau de fibres optiques. Selon l'invention, l'extrémité du faisceau dans les organes de détection est conformée de manière tubulaire, tandis qu'un capteur de la lumière réfléchie est supporté par le rotor et que des moyens de transmission de cette lumière réfléchie relient les organes de détection au capteur et comportent un chemin optique disposé à l'intérieur du faisceau tubulaire de fibres d'éclairement et un miroir incliné pour réfléchir les rayons issus du chemin optique en direction du capteur sans déformer l'image de la zone de réflection de lumière inscrite dans l'extrémité tubulaire du faisceau qui constitue la scène à surveiller, les signaux issus du capteur sont transmis à une installation d'exploitation fixe par un collecteur tournant à contacts frottants disposé entre stator et rotor. Le chemin peut bien entendu comporter des lentilles permettant de focaliser ou de rassembler les faisceaux lumineux sans en altérer la structure et la cohérence.

Il sera avantageux que le diamètre intérieur de l'extrémité tubulaire du faisceau soit supérieur à la largeur du cordon.

De manière préférée le capteur est constitué par une matrice de cellules de caméra vidéo couleur, connue en elle-même, scrutée par balayage et associée à un circuit de traitement des composantes fondamentales de la lumière. On comprend que, comme la géométrie de la scène observée est conservée, il est tout à fait possible au moyen d'une technique de vidéo simple et classique de convertir l'image de la scène en des signaux électriques pour transporter cette image de manière commode et la recomposer sur un écran.

Ainsi les signaux issus du circuit de traitement sont transmis à l'installation d'exploitation fixe par le collecteur tournant disposé entre le stator et le rotor du dispositif.

D'autres caractéristiques et avantages de l'invention ressortiront de la description d'un exemple de réalisation donné ci-après en regard de la figue unique annexée.

Cette figure représente, vu en coupe axiale, le dispositif de l'invention qui comprend une buse 1 au moyen de laquelle un cordon 2 de colle est délivré sur une surface 3. Cette buse est logée à l'intérieur d'une pièce 4 tubulaire de support, coaxiale à cette dernière. Cette pièce tubulaire comporte une collerette supérieure 5 pour sa fixation à un dispositif de support et d'entraînement de la buse 1 parallèlement à la surface 3. La pièce 4 constitue un stator dans lequel est monté à rotation un rotor 6 grâce à deux paliers à roulement 7 et 8. Le rotor 6 est équipé en partie inférieure d'organes 9 de détection de la présence du cordon 2. Au moyen d'un dispositif d'asservissement non représenté, ces organes de détection 9 sont toujours situés derrière la buse 1 par rapport à son sens d'avancement A au-dessus de la surface 3.

Le trait mixte 10 représente symboliquement un faisceau de fibres optiques issu d'une source de lumière non représentée. Ce faisceau, dans le stator 4, est conformé en un faisceau tubulaire 11. Ainsi les extrémités des fibres du faisceau tubulaire 11 forment-elles un anneau 12 autour de la buse 1. Cet anneau est constitué dans une surface radiale 13 du stator 4 situé en face et à proximité d'une surface radiale 14 du rotor 6.

Le rotor 6 comporte également un faisceau de fibres optiques 15 qui, a son extrémité supérieure voisine de la surface 14, est conformé en un faisceau tubulaire 16 pour, au niveau de la surface 14, présenter un anneau semblable à celui que forme l'extrémité du faisceau tubulaire 11 dans la surface 13. A son extrémité inférieure, ce faisceau 15 est également conformé en un faisceau tubulaire 17 à l'intérieur des organes de détection 9, l'intérieur de ce faisceau tubulaire étant vide.

On a réalisé entre le faisceau 10 et le faisceau 15, au niveau des surfaces 13 et 14, un joint optique tournant et qui permet une transmission de la lumière depuis la source de laquelle est issu le faisceau 10 jusqu'au faisceau tubulaire 17. Les fibres optiques sont telles que la lumière issue de chacune d'elles à l'extrémité du faisceau tubulaire 17, forme un cône d'angle au sommet relativement important de sorte que toute la zone qui est située en face de l'évidement central du faisceau tubulaire 17 est correctement éclairée. Cette zone éclairée constitue la scène à surveiller c'est-à-dire celle qui est traversée par le cordon 2. A cet égard, on notera qu'il sera utile que le diamètre intérieur du faisceau tubulaire 17 où le diamètre de son évidement cylindrique doit être supérieur à la largeur du cordon 2.

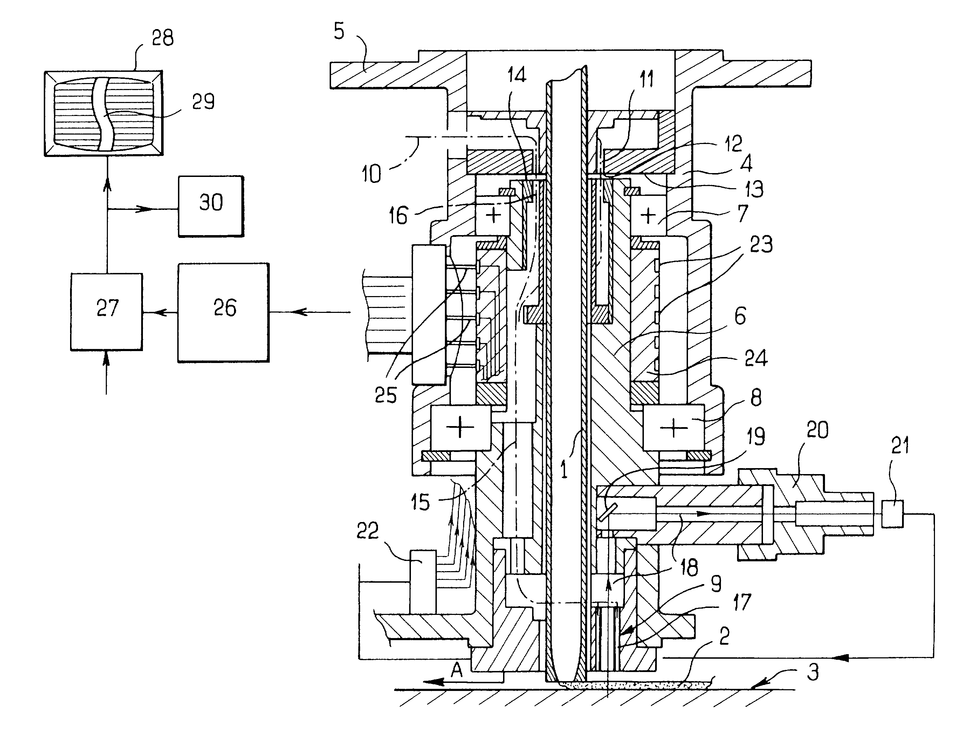

La lumière réfléchie par cette scène suit un trajet optique 18 sur la figure qui est constituée par l'intérieur du faisceau tubulaire, une partie creuse du rotor, un miroir incliné 19 permettant de renvoyer les rayons réfléchis dans une direction radiale par rapport au rotor. Le chemin optique est contenu dans un support 20 pour un ensemble ordonné de cellules photosensibles 21 semblable à celle utilisée dans une technique de caméra vidéo.

On mentionnera simplement, ce qui est connu en vidéo, que chaque cellule est divisée en trois parties chacune sensible à l'une des trois couleurs fondamentales bleu, vert et rouge de la lumière. L'ensemble de cellules est rangé en matrice et cette matrice est scrutée selon une séquence de balayage bien déterminée dans l'espace et dans le temps, et délivre un signal numérique pour chacune des trois composantes de la lumière qu'elle reçoit. Ces signaux sont ensuite transmis en direction d'une unité électronique 22 de leur traitement qui est elle-même embarquée sur le rotor 6 du dispositif et de préférence à l'opposé de la matrice 21 pour équilibrer ce rotor, cette unité de traitement procédant à une modulation et un codage des signaux qu'elle reçoit afin de les préparer à une transmission vers une unité d'exploitation. Cette transmission, en général en série, s'opère par le moyen de contacteurs électriques frottants, à savoir des conducteurs électriques circulaires 23 connectés en sortie de l'unité électronique de traitement 22, portés par une bague 24 calée en rotation sur le rotor 6 et des balais 25 frottant sur chacun des conducteurs 23. Ces balais 25 sont fixes car portés par le stator 4 et sont reliés à l'entrée d'une unité électronique 26 de démodulation des signaux qui les transmet à un dispositif 27 permettant de les comparer à une plage de valeur de référence qui correspondra à ce que l'on attend d'une lumière réfléchie par un échantillon test du cordon. La plage ou fenêtre de référence sera déterminée de manière préférée par apprentissage du dispositif et mémorisation des valeurs correspondant à un échantillon de référence. En sortie du dispositif 27, selon les résultats de la comparaison de chacun des signaux à la fenêtre de référence correspondante, les signaux émis par le dispositif 27 seront à haute ou basse valeur et seront redistribués sur une matrice de visualisation (un écran vidéo 28) comme ils avaient été scrutés au niveau de la matrice 21.

Sur l'écran vidéo 28 apparaîtra donc par exemple sur fond noir, une image 29 du cordon vu par le dispositif de détection 9. Cette image sera formée par balayage comme dans les techniques de vidéo habituelles et permettra une surveillance visuelle de la qualité du cordon 2. Une dérivation des signaux émis par le dispositif 27 sera dirigée vers un dispositif d'alarme 30 qui pourra réagir lorsque, pendant un certain temps, aucun signal correspondant à la présence du cordon ne sera émis. Ce temps pourra être réglé en fonction de l'épaisseur moyenne du cordon déposé car de petites interruptions peuvent ne pas empêcher la formation d'une bonne étanchéité lors de l'écrasement du cordon entre les deux pièces.

Le dispositif selon l'invention permet une surveillance extrêmement fine de la qualité du cordon déposé en même tant qu'une visualisation de celui-ci qui peut être très utile pour l'opérateur chargé de la machine.

## Revendications

1. Procédé pour contrôler le cordon (2) d'un produit formant joint, délivré sur une surface (3) par l'extrémité d'une buse (1) déplacée au-dessus de cette surface (3) le long d'un trajet déterminé, selon lequel on éclaire, derrière la buse (1) par rapport à son sens de déplacement (A), la fraction du cordon (2) fraîchement déposée par un faisceau lumineux issu d'un faisceau (17) de fibres optiques et on recueille la lumière réfléchie pour la transmettre à une unité de traitement (26, 27) caractérisé en ce que le faisceau de fibres optiques (17) est tubulaire, en ce que la lumiere réfléchie (18) est transmise à l'unité de traitement le long d'un chemin optique qui conserve la structure et l'orientation de la scène éclairée jusqu'à un capteur (21) de transformation de cette lumière en signaux électriques, ce capteur étant mobile avec le faisceau d'éclairement et en ce qu'on transmet les signaux électriques issus de ce capteur (21) à une installation fixe au travers de contacts frottants (23, 25).

2. Dispositif pour mettre en oeuvre le procédé selon la revendication 1, comportant une buse (1) de formation du cordon (2) de colle, des organes (9) de détection situés à proximité de la sortie de la buse (1) et portés par un rotor (6) tournant par rapport à un stator (4) supportant la buse (1), autour d'un axe confondu avec celui de la buse (1), des moyens de transmission (11, 15) d'une lumière d'éclairement aux organes (9) de détection comprenant un faisceau de fibres optiques (15), caractérisé en ce que l'extrémité du faisceau de fibres optiques est conformée de manière tubulaire (17) dans les organes (9) de détection, en ce qu'un capteur (21) de la lumière réfléchie (18) est supporté par le rotor (6), en ce que des moyens de transmission de cette lumière réfléchie relient les organes de détection (9) au capteur (21) et comportent un chemin optique disposé à l'intérieur du faisceau (17) tubulaire de fibres et un miroir (19) incliné pour réfléchir les rayons (18) issus de la scène à surveiller en direction du capteur (21) sans déformer l'image de cette scène inscrite dans l'extrémité tubulaire du faisceau (17), et en ce que les signaux issus du capteur sont transmis à une installation d'exploitation fixe (26, 27, 28) par un collecteur tournant (23, 25) à contacts frottants disposé entre stator (4) et rotor (6).

3. Dispositif selon la revendication 2 caractérisé en ce que le diamètre intérieur de l'extrémité tubulaire (17) du faisceau (15) est supérieur à la largeur du cordon (2).

4. Dispositif selon la revendication 2 ou la revendication 3 caractérisé en ce que le capteur est constitué par une matrice (21) de cellules de caméra vidéo couleur, connue en elle-même, scrutée par un balayage et associée à un circuit (22) de traitement des composantes fondamentales de la lumière.

## Patentansprüche

1. Verfahren zur Überprüfung des Bandes (2) eines eine Dichtung bildenden Produktes, das auf eine Oberfläche (3) aus dem Ende einer oberhalb dieser Fläche (3) angeordneten Düse (1) entlang einer vorgegebenen Bahn abgegeben wird, wobei man hinter der Düse (1) - bezogen auf ihre Bewegungsrichtung (A) - den frisch aufgebrachten Abschnitt des Bandes (2) durch ein Lichtstrahlenbündel beleuchtet, das aus einem Lichtleitfaserbündel (17) austritt, und wobei man das reflektierte Licht empfängt, um es an eine Verarbeitungseinheit (26, 27) zu übertragen, dadurch **gekennzeichnet,** daß das Lichtleitfaserbündel (17) rohrförmig ist, daß das reflektierte Licht (18) zu der Verarbeitungseinheit entlang einem optischen Weg übertragen wird, der die Struktur und Ausrichtung der beleuchteten Szene bis zu einem Sensor (21) zur Umwandlung dieses Lichtes in elektrische Signale erhält, wobei der Sensor mit dem Belichtungsbündel bewegbar ist, und daß man die von dem Sensor (21) abgegebenen elektrischen Signale an eine feststehende Einrichtung über Schleifkontakte (23, 25) überträgt.

2. Vorrichtung zur Durchführung des Verfahrens nach Anspruch 1, umfassend eine Düse (1) zum Abgeben eines Klebstoffbandes (2), Detektororgane (9), die nahe dem Ausgang der Düse (1) angeordnet und von einem Rotor (6) gehalten sind, der sich relativ zu einem die Düse (1) tragenden Stator (4) um eine mit der Achse der Düse (1) zusammenfallende Achse dreht, und ein Lichtleitfaserbündel (15) umfassende Mittel (11, 15) zur Übertragung von Beleuchtungslicht zu den Detektororganen (9), dadurch **gekennzeichnet,** daß das Ende (17) des Lichtleitfaserbündels in den Detektororganen (9) rohrförmig ausgebildet ist, daß ein Sensor (21) für das reflektierte Licht (18) an dem Rotor (6) gehalten ist, daß die Mittel zur Übertragung dieses reflektierten Lichtes die Detektororgane (9) mit dem Sensor (21) verbinden und einen optischen Pfad, der innerhalb des rohrförmigen Faserbündels (17) liegt, und einen geneigten Spiegel umfassen, um die von der zu überwachenden Szene ausgehenden Strahlen (18) in Richtung auf den Sensor (21) ohne Verzerrung des Bildes dieser Szene zu reflektieren, das an dem Ende des rohrförmigen Bündels (17) aufgenommen wird, und daß die von dem Sensor abgegebenen Signale an eine feststehende Auswerteeinrichtung (26, 27, 28) über einen Schleifkontakte aufweisenden Drehkollektor übertragen wird, der zwischen Stator (4) und Rotor (6) angeordnet ist.

3. Vorrichtung nach Anspruch 2, dadurch **gekennzeichnet**, daß der Innendurchmesser des rohrförmigen Endes (17) des Bündels (15) größer als die Breite des Bandes (2) ist.

4. Vorrichtung nach Anspruch 2 oder 3, dadurch **gekennzeichnet,** daß der Sensor von einer aus einer Farbvideokamera an sich bekannten Zellenmatrix (21) gebildet ist, die abgetastet wird und mit einer Verarbeitungsschaltung (22) zur Verarbeitung der Grundkomponenten des Lichtes verbunden ist.

## Claims

1. A method of monitoring a bead (2) of material that forms a seal which is applied to a surface (3) via the end of a nozzle (1) that is moved over said surface (3) along a determined path, in which the fraction of the recently-deposited bead (2) behind the nozzle (1) relative to its direction of movement (A) is illuminated by a light beam coming from a bundle (17) of optical fibers, and the light reflected is recovered to be conveyed to a processor unit (26, 27), the method being characterized in that the optical fiber bundle (17) is tubular, in that the reflected light (18) is conveyed to the processor unit along an optical path which conserves the structure and the orientation of the illuminated scene to a sensor (21) for transforming said light into electrical signals, said sensor moving with the illuminating bundle, and in that the electrical signals from the sensor (21) are conveyed to a stationary installation via wiper contacts (23, 25).

2. Apparatus for implementing the method of claim 1, the apparatus comprising a nozzle (1) for forming a bead (2) of adhesive, detector members (9) situated close to the outlet of the nozzle (1) and carried by a rotor (6) that is rotatable relative to a stator (4) supporting the nozzle (1) about an axis that coincides with the axis of the nozzle (1), and transmission means (11, 15) for transmitting illuminating light to the detector members (9) and comprising a bundle of optical fibers (15), the apparatus being characterized in that the end of the optical fiber bundle is shaped in tubular manner (17) in the detector members (9), in that a sensor (21) of reflected light (18) is supported by the rotor (6), in that means for conveying said reflected light connect the detector members (9) to the sensor (21), and include an optical path located inside the tubular bundle of fibers (17) and an inclined mirror (19) for reflecting the rays (18) from the scene being monitored towards the sensor (21) without deforming the image of said scene written in the tubular end of the beam (17), and in that the signals from the sensor are transmitted to a stationary operating installation (26, 27, 28) via a rotary collector (23, 25) having wiper contacts and disposed between the sensor (4) and the rotor (6).

3. Apparatus according to claim 2, characterized in that the inside diameter of the tubular end (17) of the bundle (15) is greater than the width of the bead (2).

4. Apparatus according to claim 2 or claim 3, characterized in that the sensor is constituted by a conventional matrix (21) of color video camera cells that are scanned and associated with a circuit (22) for processing the fundamental components of light.
